# EUROPÄISCHE PATENTSCHRIFT

(11) **EP 0 700 705 B1**
(45) Veröffentlichungstag und Bekanntmachung des Hinweises auf die Patenterteilung: **17.04.2002**
(21) Anmeldenummer: 95114134.0
(22) Anmeldetag: 08.09.1995
(51) Int. Cl.: B01D 3/14

(54) **Verfahren zur kontinuierlichen destillativen Trennung eines Gemisches**
Method for continuous destillative separation of a mixture
Procédé pour la séparation d'un mélange pour distillation continue

(30) Priorität: 09.09.1994 DE 4432172
(43) Veröffentlichungstag der Anmeldung: 13.03.1996
(73) Patentinhaber: BASF AKTIENGESELLSCHAFT, 67056 Ludwigshafen (DE)
(72) Erfinder: Kaibel, Gerd, Dr., D-68623 Lampertheim (DE); Ensen, Heinz-Friedrich, D-67256 Weisenheim (DE)
(74) Vertreter: Isenbruck, Günter, Dr.

(56) Entgegenhaltungen:
- US-A- 3 058 893
- CHEMIE-INGENIEUR-TECHNIK, Bd. 61, Nr. 2, Februar 1989 WEINHEIM, Seiten 104-112, XP 000036728 GERD KAIBEL UND ECKHART BLA 'möglichkeiten zur proze integration bei destillativen trennverfahren'
- CHEMIE INGENIEUR TECHNIK, Bd. 61, Nr. 1, Januar 1989 WEINHEIM, Seiten 16-25, XP 000025551 GERD KABEL, ECKHART BLA UND JÜRGEN KÖHLER 'gestaltung destillativer trennungen unter einbeziehung thermodynamischer gesichtspunkte'

## Beschreibung

Die Erfindung betrifft ein Verfahren zur kontinuierlichen destillativen Trennung eines Zulaufgemisches in zwei Fraktionen mittels zweier Destillationskolonnen.

Die Destillation erfolgt gewöhnlich dadurch, daß ein Zulaufgemisch bestehend aus zwei Bestandteilen mit unterschiedlicher Siedetemperatur in den mittleren Bereich einer Destillationskolonne eingespeist wird. Der leichtsiedende Bestandteil kann dann am oberen Ende, dem Kopfende, der Kolonne als Destillat entnommen werden. Der schwersiedende Bestandteil kann am unteren Ende der Kolonne, dem Sumpfende, als Destillationsrückstand entnommen werden.

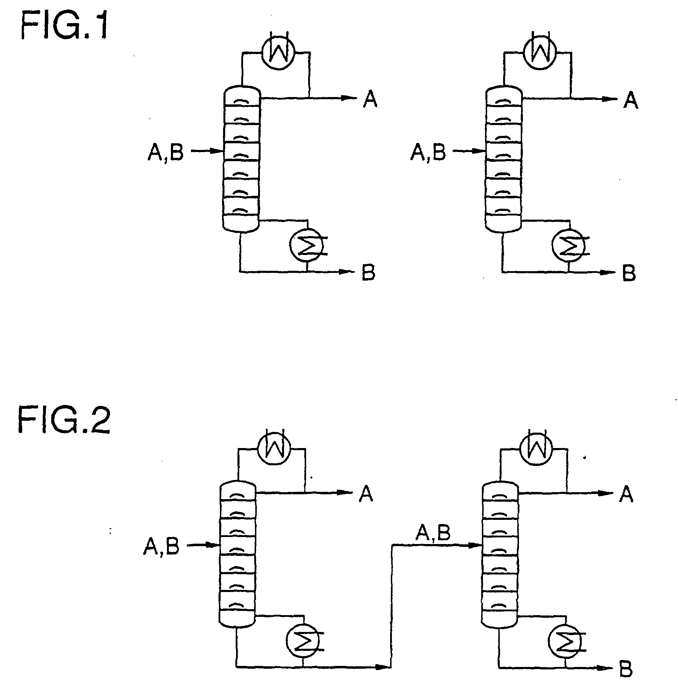

Zum Betrieb mehrerer Destillationskolonnen zur Trennung eines Gemisches sind im Stand der Technik verschiedene Möglichkeiten bekannt, wie sie in den Figuren 1 bis 3 veranschaulicht sind. Solche Zusammenschaltungen mehrerer Destillationskolonnen kommen vor allem bei einer Kapazitätserweiterung bestehender Anlagen zum Einsatz.

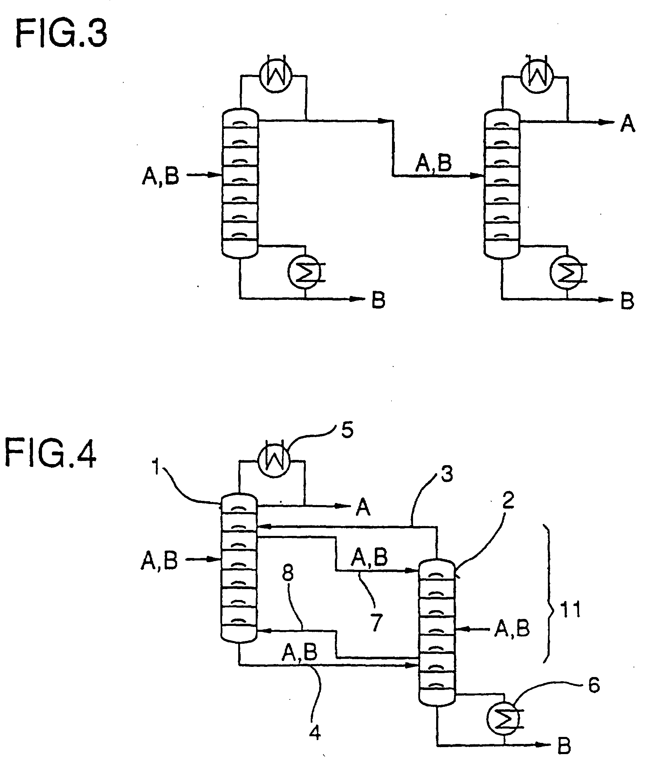

In Fig. 1 sind zwei Destillationskolonnen gezeigt, die parallel und unabhängig voneinander betrieben werden, wobei ein Zulauf eines Gemisches A, B auf beide Kolonnen aufgeteilt wird und von beiden Kolonnen die getrennten Bestandteile A und B entnommen werden. Fig. 2 zeigt eine Verschaltung der Destillationskolonnen in direkter Trennfolge, wohingegen Fig. 3 eine Verschaltung zweier Destillationskolonnen in inverser Trennfolge darstellt.

Dabei wird das Sumpfprodukt bzw. das Kopfprodukt der ersten Destillationskolonne zu der zweiten Destillationskolonne als Zulaufgemisch geführt. Durch eine derartige Hintereinanderschaltung kann der Wärmeenergiebedarf gegenüber der in Fig. 1 gezeigten Anordnung verbessert werden.

In dem Aufsatz "Möglichkeiten zur Prozeßintegration bei destillativen Trennverfahren" von G. Kaibel und E. Blaß in Chem.-Ing.-Tech. 61 (1989), Nr. 2, Seiten 104 bis 112 sind weitere Verschaltungsmöglichkeiten für Destillationskolonnen gezeigt. Diese betreffen Gemische mit mehr als zwei Bestandteilen.

Es ist das Ziel der Erfindung, den Energie- und Investitionsaufwand zur Destillation von Zweistoffgemischen zu verringern.

Das Ziel der Erfindung wird erreicht mit einem Verfahren gemäß den Ansprüchen 1 oder 7. Vorteilhafte Ausgestaltungen der Verfahren sind in den jeweiligen Unteransprüchen angegeben.

In einer Vorrichtung werden zwei Destillationskolonnen verwendet, die jeweils in ihrem mittleren Bereich mit einem Zulaufgemisch gespeist werden. Die beiden Destillationskolonnen werden mit unterschiedlichen Temperaturprofilen betrieben, die sich jedoch zumindest in Teilbereichen überlappen. Das heißt, vorzugsweise das Kopfende einer Destillationskolonne befindet sich temperaturmäßig in einem mittleren Bereich der anderen Destillationskolonne, und das Sumpfende einer Destillationskolonne in einem mittleren Bereich der jeweils anderen Destillationskolonne. Der Temperaturbereich einer Destillationskolonne kann in dem Temperaturbereich der anderen Destillationskolonne vollständig enthalten sein, oder die Temperaturprofile stimmen nur in Teilbereichen überein. Dabei ist zu beachten, daß die Temperaturprofile in den Destillationskolonnen unterschiedlich sein können, so daß nur von einem vergleichbaren Temperaturprofil oder Temperaturniveau in Teilbereichen gesprochen werden kann, nicht jedoch von völliger Übereinstimmung. Mit Überlappungsbereich ist im Folgenden daher der bei beiden Destillationskolonnen zwischen den Verbindungsleitungen liegende Bereich gemeint.

Wegen der sich überlappenden Temperaturprofile ist es möglich, den Brüdenstrom am Kopfende einer Destillationskolonne der jeweils anderen Destillationskolonne zuzuführen. In analoger Weise ist es auch möglich, den Flüssigkeitsstrom am Sumpfende einer Destillationskolonne der jeweils anderen Destillationskolonne zuzuführen. Auf diese Weise wird eine gegenseitige, thermodynamische Kopplung beider Destillationskolonnen erzielt. Dadurch kann der Energiebedarf zur Trennung einer gegebenen Menge eines Zulaufgemisches gesenkt werden.

Die Verfahren der vorliegenden Erfindung sind besonders vorteilhaft bei einer Kapazitätserweiterung einer bestehenden Destillationsanlage einsetzbar. Wenn beispielsweise die Kapazität einer bestehenden Destillationskolonne verdoppelt werden soll, so kann dies durch die erfindungsgemäße Verschaltung mit einer zweiten Destillationskolonne gleicher Kapazität erreicht werden, ohne dabei auch den erforderlichen Prozeßenergieaufwand zu verdoppeln.

In bevorzugten Ausführungsbeispielen der Erfindung sind am oberen und unteren Ende des Temperaturüberlappungsbereiches jeweils zwei Verbindungsleitungen zwischen den beiden Destillationskolonnen vorgesehen. Jeweils eine Leitung führt einen Flüssigkeitsstrom, wohingegen die jeweils andere Leitung einen Brüdenstrom führt. Dadurch kann die thermodynamische Kopplung beider Destillationskolonnen weiter verbessert werden. Weiterhin ist bevorzugt, in der Verbindungsleitung am unteren Ende des Temperaturüberlappungsbereiches, die den Flüssigkeitsstrom führt, einen Verdampfer zwischenzuschalten. In ähnlicher Weise ist bevorzugt, in der Verbindungsleitung am oberen Ende des Temperaturüberlappungsbereiches, die den Brüdenstrom führt, einen Kondensator oder einen Teilkondensator zwischenzuschalten.

Wie gezeigt, stellt die thermodynamische Kopplung zweier Destillationskolonnen zur Trennung eines Zweistoffgemisches insgesamt zwei Zulaufgemischeingänge, einen Ausgang für den Leichtsieder und einen Ausgang für den Schwersieder bereit. Das Mischungsverhältnis und Prozeßparameter, wie Temperatur und Druck, an den Zulaufgemischeingängen können sich voneinander unterscheiden, sind jedoch vorzugsweise etwa gleich. Dies unterscheidet sich von den oben diskutierten Anordnungen des Standes der Technik, bei denen mehr als je nur ein Ausgang für den Schwersieder und für den Leichtsieder erforderlich sind.

Weitere Vorteile, Merkmale und Anwendungsmöglichkeiten der vorliegenden Erfindung ergeben sich aus der nachfolgenden Beschreibung von bevorzugten Ausführungsbeispielen in Verbindung mit der Zeichnung.

In der Zeichnung zeigen:
- Fig. 1 bis 3: Schaltungsanordnungen für Destillationskolonnen nach dem Stand der Technik;
- Fig.4: ein erstes Ausführungsbeispiel der Erfindung mit abgestuften Temperaturprofilen;
- Fig. 5: ein zweites Ausführungsbeispiel der Erfindung, bei dem eine Destillationskolonne ein kleineres Temperaturprofil aufweist;
- Fig. 6: eine Variante des ersten Ausführungsbeispieles;
- Fig. 7: eine Variante des zweiten Ausführungsbeispieles;
- Fig. 8 und 9: jeweils eine Variante des Ausführungsbeispiels der Fig. 6 bzw. 7.

In Fig. 4 sind zwei Destillationskolonnen 1, 2 mit abgestuften Temperaturprofilen gezeigt, die gemäß der Erfindung verschaltet sind. Am Kopf der ersten Destillationskolonne 1 wird der Leichtsieder A ausgeschleust. Am Kopf ist dazu ein Kondensator 5 vorgesehen. Am Sumpf der zweiten Destillationskolonne 2 wird der Schwersieder B ausgeschleust. An diesem Sumpf ist ein Verdampfer 6 angeordnet. Beiden Destillationskolonnen 1, 2 wird etwa in deren Mitte jeweils ein Zulaufgemisch A, B zugeführt.

Am Kopf der zweiten Destillationskolonne 2 wird ein an Leichtsiedern angereicherter Brüdenstrom über einer Leitung 3 der ersten Destillationskolonne 1 zugeführt, und zwar oberhalb des Einspeisungspunktes für das Zulaufgemisch. Am Sumpf der ersten Destillationskolonne 1 wird ein an Schwersiedern angereicherter Flüssigkeitsstrom über eine Leitung 4 der zweiten Destillationskolonne 2 zugeführt, und zwar unterhalb des Einspeisungspunktes des Zulaufgemisches. Zusätzlich wird der ersten Destillationskolonne 1 in dem Bereich, wo von der Leitung 3 der Kopfbrüdenstrom der zweiten Destillationskolonne 2 zugeführt wird, ein Flüssigkeitsstrom entnommen, der über eine Leitung 7 dem oberen Ende der zweiten Destillationskolonne 2 zugeführt wird. Weiterhin wird der zweiten Destillationskolonne 2 in dem Bereich, in dem der Sumpfflüssigkeitsstrom von der Destillationskolonne 1 über die Leitung 4 eingespeist wird, ein Brüdenstrom abgeteilt und über die Leitung 8 am unteren Ende der Destillationskolonne 1 eingespeist.

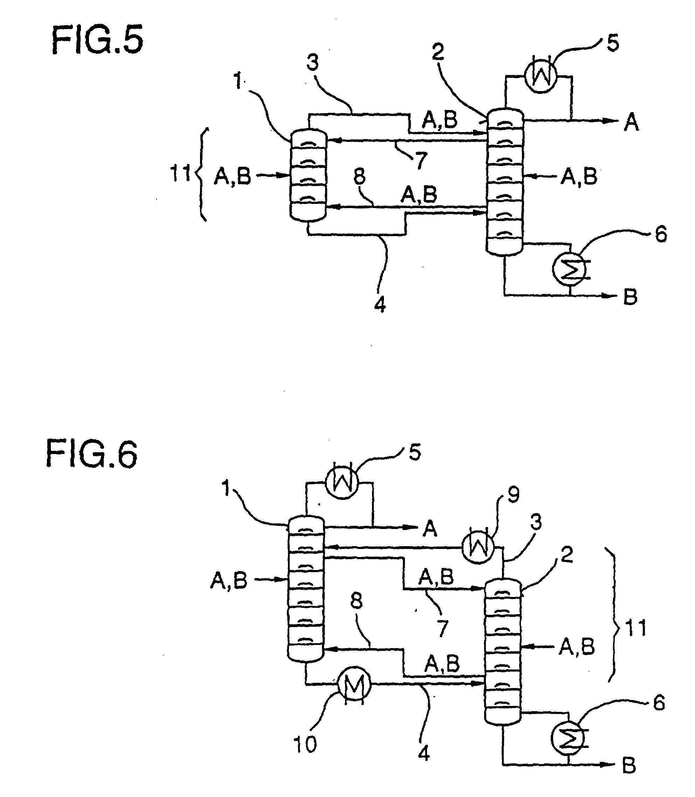

Bei der in Fig. 5 gezeigten Anordnung zweier Destillationskolonnen 1, 2 werden sowohl der Leichtsieder A als auch der Schwersieder B am Kopf- bzw. Sumpfende einer Destillationskolonne 2 entnommen. Wie im obigen ersten Ausführungsbeispiel sind auch hier an den Entnahmestellen der Destillationsprodukte jeweils ein Kondensator 5 und ein Verdampfer 6 vorgesehen. In diesem Ausführungsbeispiel sind diese entsprechend am Kopf- bzw. Sumpfende der zweiten Destillationskolonne 2 angeordnet. Eine erste Destillationskolonne 1 hat ein Temperaturprofil, das im Temperaturprofil der zweiten Destillationskolonne 2 enthalten ist. Das heißt, die Kopftemperatur der ersten Destillationskolonne 1 ist höher oder genauso hoch wie die Kopftemperatur der zweiten Destillationskolonne 2, und die Sumpftemperatur der ersten Destillationskolonne 1 ist niedriger oder genauso hoch wie die Sumpftemperatur der zweiten Destillationskolonne 2. Das Zulaufgemisch A, B wird beiden Destillationskolonnen 1, 2 in jeweils ihrem mittleren Bereich zugeführt.

Am Kopf der ersten Destillationskolonne 1 wird ein an Leichtsiedern angereichertes Gemisch entnommen und über eine Leitung 3 zu der zweiten Destillationskolonne 2 geführt. Am Sumpf der ersten Destillationskolonne 1 wird ein an Schwersiedern angereicherter Flüssigkeitsstrom über eine Leitung 4 zu der zweiten Destillationskolonne 2 geführt. Zur thermodynamischen Kopplung wird zusätzlich im Bereich der Einspeisestelle der Leitung 3 von der zweiten Destillationskolonne 2 ein Flüssigkeitsstrom entnommen und über eine Leitung 7 dem oberen Ende der ersten Destillationskolonne 1 zugeführt. Umgekehrt wird der zweiten Destillationskolonne 2 im Bereich der Einspeisestelle der Leitung 4 ein Brüdenstrom abgeteilt und am unteren Ende der ersten Destillationskolonne 1 eingespeist.

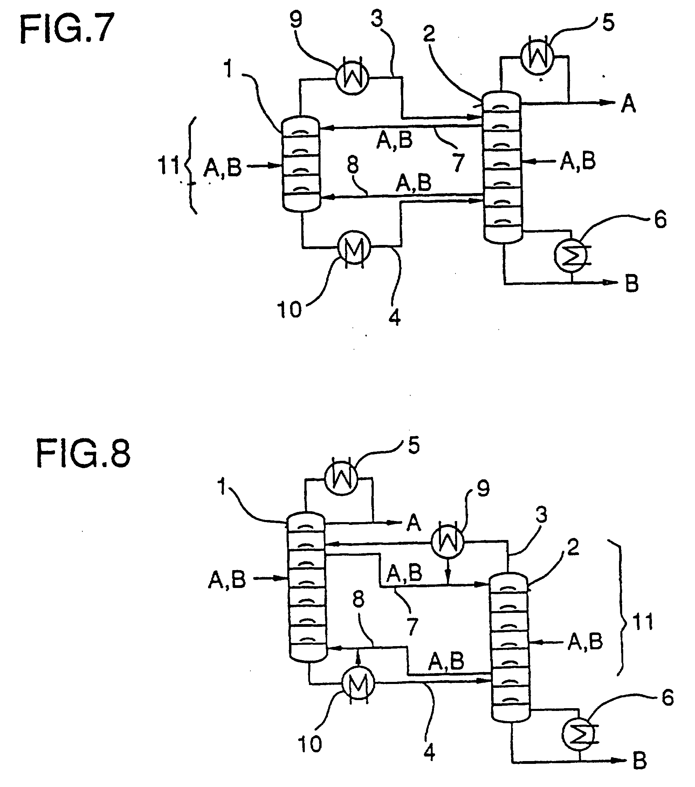

Das in Fig. 6 gezeigte Ausführungsbeispiel unterscheidet sich vom ersten Ausführungsbeispiel dadurch, daß in die Leitung 3 am oberen Ende des Temperaturüberlappungsbereiches ein Kondensator 9 zwischengeschaltet ist. Es ist auch möglich gemäß Fig. 8, einen Partialkondensator zu verwenden und die auskondensierte Flüssigkeit ganz oder teilweise auf den Kopf der Kolonne 2 aufzugeben. Außerdem ist in die Verbindungsleitung 4 am unteren Ende des Temperaturüberlappungsbereiches ein Verdampfer 10 zwischengeschaltet. Auf diese Weise kann der thermodynamische Wirkungsgrad weiter erhöht werden. Der Brüdenstrom aus diesem Verdampfer kann in die Kolonne 2 (Fig. 6) oder die Kolone 1 (Fig. 8) eingeleitet werden.

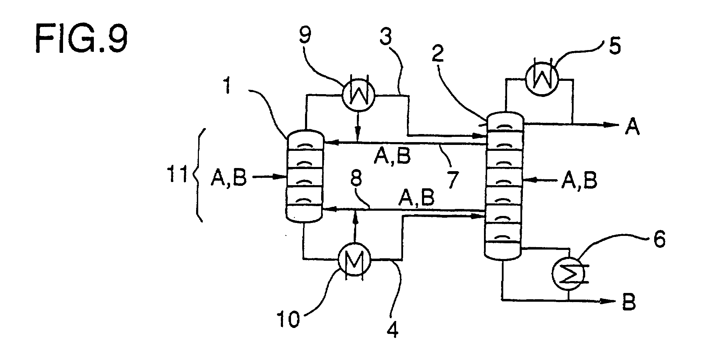

Das in Fig. 7 bzw. Fig. 9 gezeigte Ausführungsbeispiel unterscheidet sich von dem in Fig. 5 gezeigten zweiten Ausführungsbeispiel, analog zu Fig. 6, dadurch, daß in der Leitung 3 am oberen Ende des Temperaturüberlappungbereiches ein Kondensator 9 zwischengeschaltet ist und daß in die Leitung 4 am unteren Ende des Temperaturüberlappungbereiches ein Verdampfer 10 zwischengeschaltet ist.

Bei Verwendung von Total- oder Partialkondensatoren 9 ist es möglich, auf die Leitung 7 zu verzichten. Entsprechendes gilt für die Anwendung eines Verdampfers 10, der es ermöglicht, die Leitung 8 wegzulassen.

Die Erfindung läßt sich insbesondere bei der Kapazitätserweiterung bereits bestehender Destillationsanlagen einsetzen. Bei der Kapazitätserweiterung einer vorhandenen Kolonne ist man aus Kostengründen bestrebt, diese weiter zu nutzen. Man baut eine zweite Kolonne und kombiniert die Funktionen beider Kolonnen. Hierzu bieten sich die bereits genannten Möglichkeiten des Standes der Technik an. Die Auswahl der geeignetsten Kolonnenverschaltung hängt von dem Trennverhalten der Gemischkomponenten, den geforderten Reinheiten und der Zulaufzusammensetzung ab und ist in jedem Einzelfall zu untersuchen. Für die Kapazitätserweiterung vorhandener Anlagen ermöglicht die erfindungsgemäße Anordnung einer zusätzlichen Kolonne sowohl Einsparungen bei den Energie- wie bei den Investitionskosten, wie unten noch gezeigt werden wird. Sie ist auch in Fällen einsetzbar, in denen beide Kolonnen bei unterschiedlichen Drücken betrieben werden. Bei dem Neuaufbau von Anlagen sind diese Kolonnenanordnungen als Alternative zu einer Kolonne mit Zwischenverdampfern bzw. Zwischenkondensatoren ebenfalls von Interesse. Sie ermöglichen vergleichbare Maßnahmen für einen Energieverbund. Im Falle des Einsatzes von Brüdenverdichtern ergeben sich mehrere flexibel einsetzbare Koppelungspunkte mit verringerter Temperaturdifferenz, die zu niedrigeren Antriebsleistungen führen.

In den Tabellen I und II sind Vergleichsrechnungen aufgeführt, um die Effektivität der Kolonnenanordnung der Erfindung mit den Kolonnenanordnungen des Standes der Technik zu vergleichen. Als Beispiel dient die destillative Auftrennung eines Zweistoffgemisches aus 50 % i-Butanol und 50 % n-Butanol bei einem Druck von 1 bar. Der Zulauf wird mit einem Mengenstrom von 2.000 kg/h flüssig siedend eingespeist. Für das Kopfund das Sumpfprodukt wird jeweils eine Reinheit von 99 % i- bzw. n-Butanol eingestellt. Es werden folgende Kolonnenschaltungen verglichen:

| | |
|---|---|
| Schaltung 1 | Geteilter Zulauf zu einer Parallelschaltung aus zwei Destillationskolonnen. Der Zulauf wird in gleichen Anteilen auf beiden Kolonnen aufgeteilt. |
| | |
| Schaltung 2 | Hintereinanderschaltung von zwei Destillationskolonnen in direkter Trennfolge. Die Leichtsiederfraktion wird in der ersten und der zweiten Kolonne, die Schwersiederfraktion nur in der zweiten Kolonne entnommen. |
| | |
| Schaltung 3 | Hintereinanderschaltung von zwei Destillationskolonnen in inverser Trennfolge. Die Leichtsiederfraktion wird nur in der zweiten, die Schwersiederfraktion sowohl in der ersten als auch in der zweiten Kolonne entnommen. |
| | |
| Schaltung 4 | Thermodynamische Trennfolge gemäß der Erfindung (Ausführungsbeispiel gemäß Fig. 6). |

Der Vergleich erfolgt jeweils rechnerisch mit einem üblichen Rechenprogramm mit genauer Modellierung der Stoffeigenschaften. Die Ergebnisse sind in den Tabellen I und II wiedergegeben. Als Beurteilungskriterium dient bei gleicher Trennstufenzahl der jeweilige Gesamtenergieverbrauch.

### Beispielrechnung nach Tabelle I:

Das oben genannte Gemisch wird in Destillationskolonnen aufgetrennt, die jeweils 40 theoretische Trennstufen aufweisen. Daraus ergibt sich in den jeweiligen Schaltungen folgender Gesamtenergieverbrauch:

| | |
|---|---|
| Schaltung 1 | 1.096 kW |
| Schaltung 2 | 1.096 kW |
| Schaltung 3 | 1.141 kW |
| Schaltung 4 | 896 kW |

### Beispielrechung nach Tabelle II:

Dasselbe Gemisch wird in Destillationskolonnen aufgetrennt, die jeweils nur 30 theoretische Trennstufen aufweisen. Dann ergibt sich folgender Gesamtenergieverbrauch:

| | |
|---|---|
| Schaltung 1 | 5.554 kW |
| Schaltung 2 | 2.604 kW |
| Schaltung 3 | 2.613 kW |
| Schaltung 4 | 1.389 kW |

Bei einer geringeren Trennstufenzahl erweist sich die Kolonnenschaltung gemäß der Erfindung als besonders vorteilhaft. Dies ist besonders dann wichtig, wenn die vorhandene Kolonne hinsichtlich der Trennstufenzahl und der geforderten Produktreinheit eher zu knapp ausgelegt ist. Die Kolonnenverschaltung der Erfindung führt bei gleicher Trennstufenzahl der Einzelkolonnen zu einer effektiven Erhöhung der tatsächlich wirksamen Trennstufenzahl des Gesamtsystems. Dies führt wiederum zu einer Verringerung des Energiebedarfs. Die obigen Beispiele für die Zerlegung eines n-/iso-Butanolgemisches für verschieden hohe Trennstufenzahlen machen dies sehr deutlich.

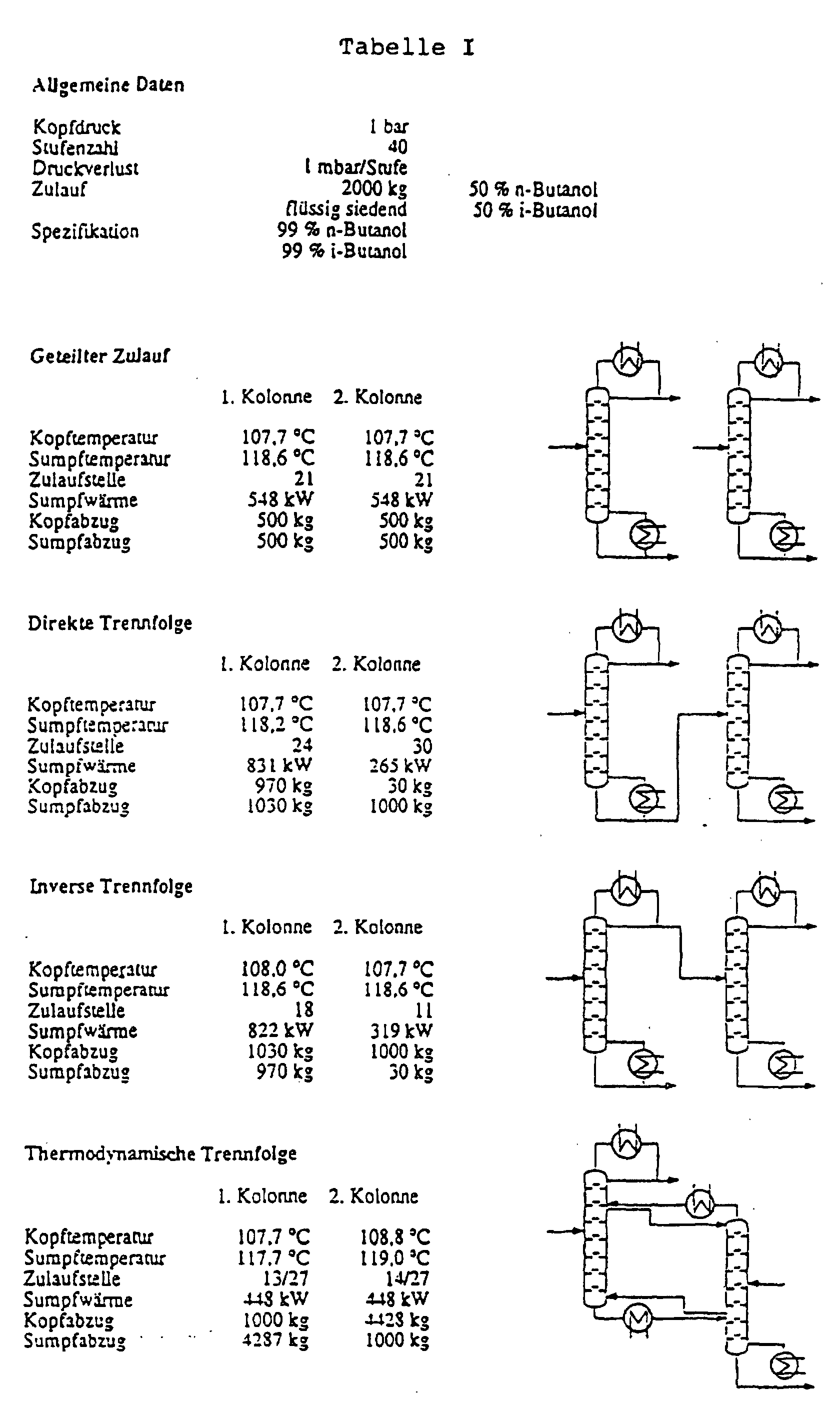

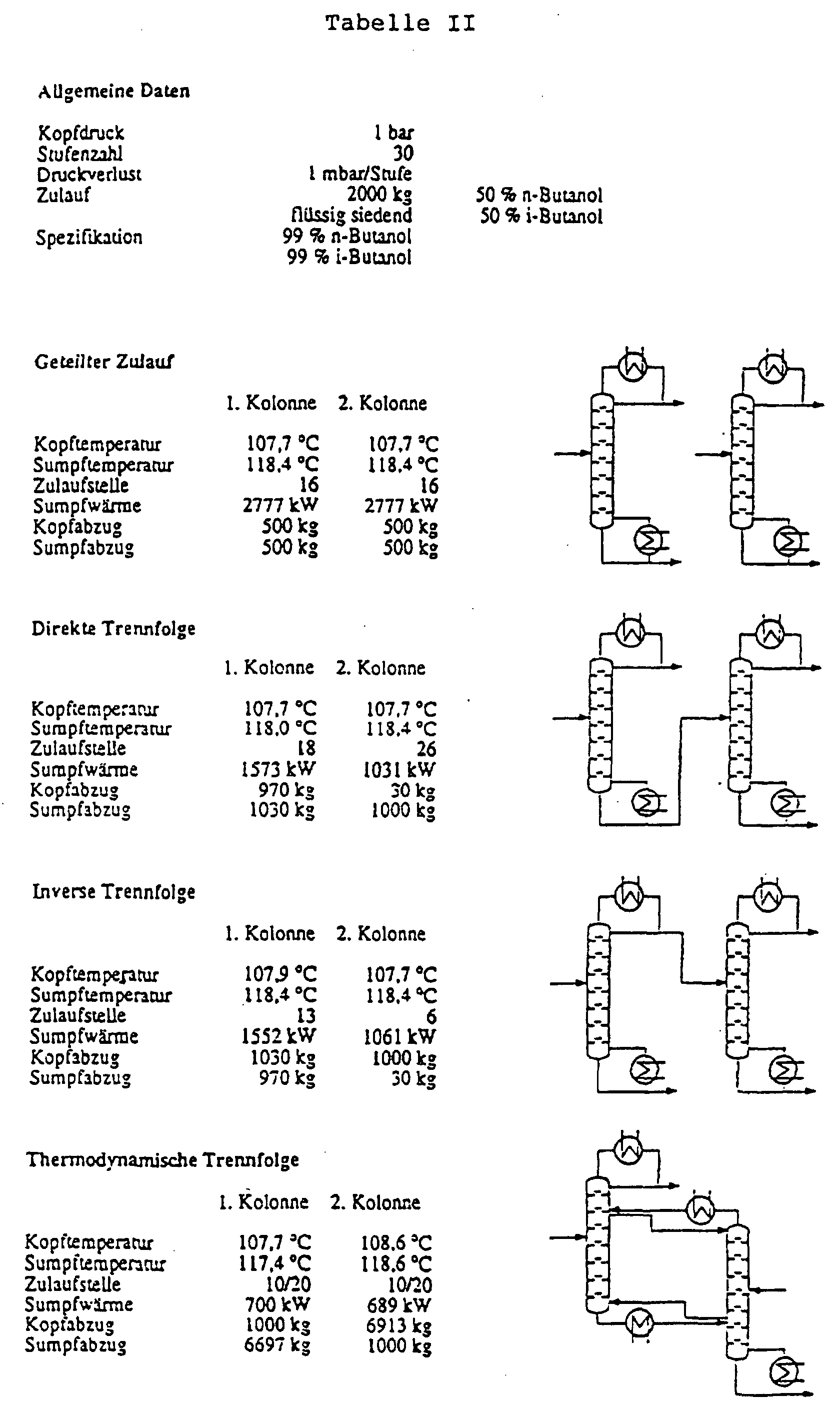

### Bezugszeichenliste

- 1: erste Destillationskolonne
- 2: zweite Destillationskolonne
- 3: erste Kopfverbindungsleitung
- 4: erste Sumpfverbindungsleitung
- 5: Ausgangskopfkondensator
- 6: Ausgangssumpfverdampfer
- 7: zweite Kopfverbindungsleitung
- 8: zweite Sumpfverbindungsleitung
- 9: Kondensator in der ersten Kopfverbindungsleitung 3
- 10: Verdampfer in der ersten Sumpfverbindungsleitung 4
- 11: Temperaturüberlappungsbereich

## Patentansprüche

1. Verfahren zur kontinuierlichen destillativen Trennung eines Zulaufgemisches, bestehend aus zwei Bestandteilen (A, B) in zwei Fraktionen mittels einer ersten Destilationskolonne (1) und einer mit dieser zusammengeschalteten zweiten Destillationskolonne (2), die zumindest jeweils in einem Überlappungsbereich (11) mit vergleichbaren, vorzugsweise annähernd gleichen, Temperaturprofilen betrieben werden, wobei das Verfahren dadurch ausgeführt wird, daß
- aus der ersten Destillationskolonne (1) am Kopf die Leichtsiederfraktion (A) entnommen und ausgeschleust wird und an ihrem unteren Ende ein Gemisch (A, B) aus Leichtsiedern und Schwersiedern entnommen und der zweiten Destillationskolonne (2) über die erste Sumpfverbindungsleitung (4) zugeführt wird,
- aus der zweiten Destillationskolonne (2) am Sumpf die Schwersiederfraktion (B) entnommen wird und an ihrem oberen Ende ein Gemisch (A, B) aus Leichtsiedern und Schwersiedern entnommen und der ersten Destillationskolonne (1) über die erste Kopfverbindungsleitung (3) zugeführt wird, wobei die Verbindungsleitungen (3,4) zwischen den Destillationskolonnen (1, 2) jeweils am oberen bzw. unteren Ende des Überlappungsbereiches (11) erfolgen, und
- das Zulaufgemisch (A, B) beiden Destillationskolonnen (1, 2) jeweils innerhalb des Überlappungsbereichs (11) zugeführt wird.

2. Verfahren nach Anspruch 1, **dadurch gekennzeichnet, daß** die erste Destilationskolonne (1) keinen eigenen Verdampfer aufweist, sondern daß ein Brüdenstrom aus der zweiten Destillationskolonne (2) abgetrennt und über die zweite Sumpfverbindungsleitung (8) am unteren Ende der ersten Destillationskolonne (1) eingespeist wird.

3. Verfahren nach Anspruch 1, **dadurch gekennzeichnet, daß** jede Destillationskolonne (1, 2) jeweils einen eigenen Verdampfer (6, 10) und/oder Kondensator (5, 9) aufweist und vorzugsweise jeweils eine Kondensation (5, 9) der Brüdenstrome an den oberen Enden der Destillationskolonnen (1,2) durchgeführt wird, insbesondere eine Totalkondensation.

4. Verfahren nach Anspruch 1, **dadurch gekennzeichnet, daß** der Brüdenstrom aus dem Kopf der zweiten Destillationskolonne (2) dampfförmig in die erste Destillationskolonne (1) über die erste Kopfverbindungsleitung (3) eingespeist wird und aus der ersten Destillationskolonne (1) aus dem Bereich der Zulaufstelle des Brüdenstroms ein Teilstrom der Flüssigkeit entnommen wird und auf den Kopf der zweiten Destillationskolonne (2) über die zweite Kopfverbindungsleitung (7) aufgegeben wird.

5. Verfahren nach Anspruch 1, 2 oder 3, **dadurch gekennzeichnet, daß** am Kopf der zweiten Destillationskolonne (2) eine Teilkondensation (9) vorgenommen wird, die auskondensierte Flüssigkeit als Rücklauf auf diese Destillationskolonne (2) gegeben wird und der Restbrüdenstrom dampfförmig in die erste Destillationskolonne (1) gegeben wird.

6. Verfahren nach Anspruch 1, 2 oder 3, **dadurch gekennzeichnet, daß** die zweite Destillationskolonne (2) bei einem im Vergleich zur ersten Destillationskolonne (1) niedrigeren Druck betrieben wird, so daß die in den beiden Destillationskolonne (1,2) auftretenden Unterschiede zwischen Minimal- und Maximaltemperatur kleiner werden.

7. Verfahren zur kontinuierlichen destillativen Trennung eines Zulaufgemisches bestehend aus zwei Bestandzeilen (A,B) in zwei Fraktionen mittels einer ersten Destillationskolonne (1) und einer damit zusammengeschalteten zweiten Destillationskolonne (2), die zumindest jeweils in einem Überlappungsbereich (11) mit vergleichbarem, insbesondere annähernd gleichem, Temperaturprofil betrieben werden, wobei das Verfahren dadurch ausgeführt wird, daß
- aus der ersten Destillationskolonne (1) am oberen Ende ein an Leichtsiedern angereichertes Gemisch entnommen und der zweiten Destillationskolonne (1) über die erste Kopfverbindungsleitung (3) zugeführt wird,
- am unteren Ende der ersten Destillationskolonne (1) ein an Schwersiedern angereichertes Gemisch entnommen und in die zweite Destillationskolonne (2) über die erste Sumpfverbingungsleitung (4) eingeleitet wird, wobei die Verbindungsleitung (3,4) zwischen den Destillationskolonnen (1, 2) jeweils am oberen bzw unteren Ende des Überlappungsbereiches (11) erfolgen,
- der zweiten Destillationskolonne (2) an deren Kopf die Leichtsiederfraktion (A) und an deren Sumpf die Schwersiederfraktion (B) entnommen und ausgeschleust werden, und
- das Zulaufgemisch (A, B) beiden Destillationskolonnen (1, 2) jeweils innerhalb des Überlappungsbereichs (11) zugeführt wird.

8. Verfahren nach Anspruch 7, **dadurch gekennzeichnet, daß** die Trennstufenzahl der ersten Destillationskolonne (1) niedriger ist als die Trennstufenzahl der zweiten Destillationskolonne (2), vorzugsweise 30 bis 70% der Trennstufenzahl der zweiten Destillationskolonne (2) ist.

9. Verfahren nach Anspruch 7 oder 8, **dadurch gekennzeichnet, daß** die erste Destillationskolonne (1) mit einem Verdampfer (10) und einem Kondensator (9) ausgerüstet ist.

10. Verfahren nach Anspruch 7 oder 8, **dadurch gekennzeichnet, daß** aus der zweiten Destillationskolonne (2) ein Teilstrom der Flüssigkeit entnommen und auf das obere Ende der ersten Destillationskolonne (1) über die zweite Kopfverbindungsleitung (7) gegeben wird.

11. Verfahren nach Anspruch 7 oder 8, **dadurch gekennzeichnet, daß** die erste Destillationskolonne (1) einen Teilkondensator (9) besitzt und der nicht kondensierte Brüdenstrom in die zweite Destillationskolonne (2) über die erste Kopfverbindungsleitung (3) eingespeist wird.

12. Verfahren nach einem der Ansprüche 7 bis 11, **dadurch gekennzeichnet, daß** die erste Destillationskolonne (1) keinen eigenen Verdampfer aufweist, sondern daß ein Brüdenstrom aus der zweiten Destillationskolonne (2) abgetrennt und über die zweite Sumpfverbindungsleitung (8) am unteren Ende der ersten Destillationskolonne (1) eingespeist wird.

## Claims

1. A process for the continuous separation of a feed mixture consisting of two components (A, B) by distillation into two fractions by means of a first distillation column (1) and, connected to this, a second distillation column (2), which are operated with comparable, preferably virtually identical, temperature profiles at least in an overlap section (11) in each case, the process being carried out by
- removing and transporting away the low-boiling fraction (A) from the top of the first distillation column (1) and removing a mixture (A, B) of low boilers and high boilers from the lower end of said column and feeding said mixture to the second distillation column (2) via the first bottom connecting line (4),
- removing the high-boiling fraction (B) from the bottom of the second distillation column (2) and removing a mixture (A, B) of low boilers and high boilers from the upper end of said column and feeding said mixture to the first distillation column (1) via the first top connecting line (3), the connecting lines (3, 4) between the distillation columns (1, 2) being effected in each case at the upper or lower end of the overlap section (11), and
- feeding the feed mixture (A, B) to the two distillation columns (1, 2), in each case within the overlap section (11).

2. A process as claimed in claim 1, wherein the first distillation column (1) has no evaporator of its own but wherein a vapor stream is separated off from the second distillation column (2) and is fed in at the lower end of the first distillation column (1) via the second bottom connecting line (8).

3. A process as claimed in claim 1, wherein each distillation column (1, 2) has its own evaporator (6, 10) or condenser (5, 9) and preferably in each case condensation (5, 9) of the vapor streams at the upper ends of distillation columns (1, 2) is carried out, in particular total condensation.

4. A process as claimed in claim 1, wherein the vapor stream from the top of the second distillation column (2) is fed in vapor form into the first distillation column (1) via the first top connecting line (3) and a bleed stream of the liquid is removed from the first distillation column (1), from the region of the feed point of the vapor stream, and is added to the top of the second distillation column (2) via the second top connecting line (7).

5. A process as claimed in claim 1, 2 or 3, wherein partial condensation (9) is carried out at the top of the second distillation column (2), the condensed liquid is fed as a reflux to this distillation column and the residual vapor stream is fed in vapor form to the first distillation column (1).

6. A process as claimed in claim 1, 2 or 3, wherein the second distillation column (2) is operated at a pressure which is lower compared to the first distillation column (1), so that the differences between minimum and maximum temperature occurring in the two distillation columns (1, 2) become smaller.

7. A process for the continuous separation of a feed mixture consisting of two components (A, B) by distillation into two fractions by means of a first distillation column (1) and, connected thereto, a second distillation column (2), which are operated, at least in an overlap section (11) in each case, with a comparable, in particular virtually identical, temperature profile, the process being carried out by
- removing a mixture enriched with low boilers from the upper end of the first distillation column (1) and feeding it to the second distillation column (2) via the first top connecting line (3),
- removing a mixture enriched with high boilers from the lower end of the first distillation column (1) and passing it into the second distillation column (2) via the first bottom connecting line (4), the connecting lines (3, 4) between the distillation columns (1, 2) being effected in each case at the upper or lower end of the overlap section (11),
- removing and transporting away the low-boiling fraction (A) from the top of the second distillation column (2) and removing and transporting away the high-boiling fraction (B) from the bottom of said column, and
- feeding the feed mixture (A, B) to the two distillation columns (1, 2), in each case within the overlap section (11).

8. A process as claimed in claim 7, wherein the number of theoretical plates of the first distillation column (1) is smaller than the number of theoretical plates of the second distillation column (2), and is preferably from 30 to 70% of the number of theoretical plates of the second distillation column (2).

9. A process as claimed in claim 7 or 8, wherein the first distillation column (1) is equipped with an evaporator (10) and a condenser (9).

10. A process as claimed in claim 7 or 8, wherein a bleed stream of the liquid is removed from the second distillation column (2) and is fed to the upper end of the first distillation column (1) via the second top connecting line (7).

11. A process as claimed in claim 7 or 8, wherein the first distillation column (1) has a partial condenser (9) and the uncondensed vapor stream is fed into the second distillation column (2) via the first top connecting line (3).

12. A process as claimed in any of claims 7 to 11, wherein the first distillation column (1) has no evaporator of its own but wherein a vapor stream is separated off from the second distillation column (2) and is fed in at the lower end of the first distillation column (1) via the second bottom connecting line (8).

## Revendications

1. Procédé pour la séparation continue par distillation d'un mélange d'alimentation d'une colonne de distillation, à deux constituants (A, B), en deux fractions à l'aide d'une première colonne à distiller (1) et d'une deuxième colonne à distiller (2) opérant en combinaison avec celle-ci, ces colonnes opérant, au moins dans un domaine de chevauchement (11) avec des profils de température comparables, de préférence à peu près identiques, les opérations étant conduites de la manière suivante :
- en tête de la première colonne à distiller (1) on prélève et on évacue la fraction volatile (A) et à la base de cette première colonne, on prélève un mélange (A, B) de fractions volatiles et de fractions lourdes qu'on envoie à la deuxième colonne à distiller (2) par la première conduite de base (4)
- au pied de la deuxième colonne à distiller (2) on prélève la fraction lourde (B) et, dans sa partie supérieure, on prélève un mélange (A, B) de fractions volatiles et de fractions lourdes qu'on envoie à la première colonne à distiller (1) par la première conduite de tête (3), les conduites (3,4) entre les colonnes à distiller (1, 2) étant réalisées respectivement à l'extrémité supérieure et à l'extrémité inférieure de la région de chevauchement (11) et
- le mélange d'alimentation (A, B) aux deux colonnes à distiller (1, 2) est amené à l'intérieur de la région de chevauchement (11).

2. Procédé selon la revendication 1, **caractérisé par le fait que** la première colonne à distiller (1) n'a pas de vaporiseur propre mais un courant partiel de vapeurs est séparé de la deuxième colonne (2) et est envoyé par la deuxième conduite de base (8) dans la partie inférieure de la première colonne (1).

3. Procédé selon la revendication 1, **caractérisé par le fait que** chacune des colonnes à distiller (1, 2) a un vaporiseur propre (6, 10) et/ou un condenseur propre (5, 9) et **par le fait que** l'on procède de préférence à une condensation (5, 9) des flux de vapeur à la partie supérieure des colonnes (1, 2) de distillation, en particulier une condensation totale.

4. Procédé selon la revendication 1, **caractérisé par le fait que** le courant de vapeurs de tête de la deuxième colonne de distillation (2) est envoyé par la première conduite de tête (3) à l'état de vapeurs à la première colonne de distillation (1) et **par le fait que** l'on évacue de la première colonne (1), de la région du point d'alimentation du courant de vapeurs, un courant partiel de liquide qu'on envoie par la deuxième conduite de tête (7) en tête de la deuxième colonne de distillation.

5. Procédé selon les revendications 1, 2 ou 3, **caractérisé par le fait que**, en tête de la deuxième colonne de distillation (2) on procède à une condensation partielle (9), on envoie le liquide condensé en reflux sur cette colonne (2) et on envoie le courant de vapeurs résiduel, à l'état de vapeurs, à la première colonne de distillation (1).

6. Procédé selon les revendications 1, 2 ou 3, **caractérisé par le fait que** la deuxième colonne (2) opère à une pression plus basse que celle qui règne dans la première colonne (1) de sorte que les différences existant dans les deux colonnes de distillation (1, 2) entre la température minimale et la température maximale est plus faible.

7. Procédé pour la séparation continue par distillation d'un mélange d'alimentation à deux constituants (A, B) en deux fractions à l'aide d'une première colonne à distiller (1) et d'une deuxième colonne à distiller (2) opérant en combinaison avec celle-ci, ces colonnes opérant, au moins dans une région de chevauchement (11) à un profil de température comparable, plus spécialement à peu près égal, les opérations étant conduites de la manière suivante :
- en tête de la première colonne de distillation (1) on prélève un mélange enrichi en les fractions volatiles et on l'envoie par la première conduite de tête (3) à la deuxième colonne (2),
- au pied de la première colonne (1) on prélève (4) un mélange enrichi en les fractions lourdes qu'on envoie par la première conduite de base (4) à la deuxième colonne, les conduites (3, 4) entre les colonnes à distiller (1, 2) se situant respectivement à l'extrémité supérieure et à l'extrémité inférieure de la région de chevauchement (11),
- on prélève de la deuxième colonne (2), en tête, la fraction légère (A) et en pied, la fraction lourde (B) et on les évacue, et
- on envoie le mélange d'alimentation (A, B) des deux colonnes à distiller (1, 2) à l'intérieur de la région de chevauchement (11).

8. Procédé selon la revendication 7, **caractérisé par le fait que** le nombre d'étages de séparation de la première colonne (1) est plus faible que le nombre d'étages de séparation de la deuxième colonne (2), et représente de préférence de 30 à 70 % du nombre d'étages de séparation de la deuxième colonne (2).

9. Procédé selon la revendication 7 ou 8, **caractérisé par le fait que** la première colonne (1) est équipée d'un vaporiseur (10) et d'un condenseur (9).

10. Procédé selon la revendication 7 ou 8, **caractérisé par le fait que** l'on prélève à la deuxième colonne (2) un courant partiel de liquide (7) qu'on envoie par la deuxième conduite de base (7) en tête de la première colonne (1).

11. Procédé selon la revendication 7 ou 8, **caractérisé par le fait que** la première colonne (1) possède un condenseur partiel (9) et **par le fait que** le courant de vapeurs non condensées est envoyée par la première conduite de tête (3) à la deuxième colonne (2).

12. Procédé selon une des revendications 7 à 11, **caractérisé par le fait que** la première colonne (1) n'a pas de vaporiseur propre mais un flux de vapeurs est séparé de la deuxième colonne de distillation (2) et est envoyé par la deuxième conduite de base (8) à la partie inférieure de la première colonne de distillation (1).
